# EUROPÄISCHE PATENTSCHRIFT

(11) **EP 2 198 179 B1**
(45) Veröffentlichungstag und Bekanntmachung des Hinweises auf die Patenterteilung: **08.06.2011**
(21) Anmeldenummer: 08785373.5
(22) Anmeldetag: 06.08.2008
(51) Int. Cl.: F16D 65/12

(54) **INNENBELÜFTETE BREMSSCHEIBE FÜR SCHEIBENBREMSEN**
INTERNALLY VENTILATED BRAKE DISC FOR DISC BRAKES
DISQUE DE FREIN À VENTILATION INTÉRIEURE POUR FREINS À DISQUES

(30) Priorität: 10.10.2007 DE 102007048442
(43) Veröffentlichungstag der Anmeldung: 23.06.2010
(73) Patentinhaber: Audi AG, 85045 Ingolstadt (DE)
(72) Erfinder: WANINGER, Robert, 85055 Ingolstadt (DE)
(74) Vertreter: Asch, Konrad
(86) Internationale Anmeldenummer: PCT/EP2008/006448
(87) Internationale Veröffentlichungsnummer: WO 2009/049704

(56) Entgegenhaltungen:
- EP-A1- 1 445 507
- EP-A1- 1 445 507
- WO-A-2007/010569
- DE-B- 1 038 593
- GB-A- 2 293 866
- US-A- 4 712 656
- US-B1- 6 536 564

## Beschreibung

Die Erfindung betrifft eine innenbelüftete Bremsscheibe für Scheibenbremsen, insbesondere für Kraftfahrzeuge, gemäß dem Oberbegriff des Patentanspruches 1.

Eine derartige innenbelüftete Bremsscheibe zeigt die EP 1 445 507 B1, bei der mehrere, in ihrer Sehnenlänge unterschiedliche Stege zwischen zwei axial zueinander beabstandete Reibscheiben im wesentlichen radial verlaufende Kühlkanäle begrenzen. Die Form der Stege und deren Anordnung bestimmen maßgeblich den spezifischen Durchsatz an Kühlluft bzw. die erzielbare Kühlleistung sowie die erforderliche Steifigkeit und Festigkeit der Bremsscheibe.

Aus der US 4,712,656 A, der WO 2007/010569 A1, der GB 2 293 866 A, der US 6,536,564 B1 sind jeweils Bremsscheiben für Scheibenbremsen bekannt, die in Radialrichtung verlaufende Kühlmittelkanäle bzw. Stege aufweisen, die allesamt im Wesentlichen bogenförmig gekrümmt ausgebildet sind. In Verbindung mit der US 4,712,656 A ist es dabei bekannt, in Radialrichtung beabstandete einzelne Stege so hintereinander anzuordnen, dass diese zwischen sich einen Spalt ausbilden, so dass im Grunde eine Art Querströmung zwischen den einzelnen radial ausgerichtete Kühlmittelkanälen erfolgen kann. Die WO 2007/010569 A1 weist Stege mit unterschiedlichen Längen auf, während bei der GB 2 293 866 A eine im Wesentlichen über die gesamte Umfangsrichtung parallele Steganordnung vorgesehen ist. Bei der US 6,536,564 B1 sind die Kühlmittelkanäle durch in den Scheibenkörper eingelassene Nuten bzw. nutförmige Ausnehmungen gebildet.

Weiter beschreibt die DE 1 038 593 C einen Aufbau einer Scheibenbremse, bei dem zwischen den Reibringen zwei unterschiedliche Rippen- bzw. Stegausbildungen wechselweise angeordnet sind.

Aufgabe der Erfindung ist es, eine Bremsscheibe der gattungsgemäßen Art vorzuschlagen, die hinsichtlich der erzielbaren Kühlleistung praktisch ohne Mehraufwand weiter optimiert ist.

Diese Aufgabe wird erfindungsgemäß mit den Merkmalen des Patentanspruches 1 gelöst. Vorteilhafte Weiterbildungen der Erfindung sind Gegenstand der Unteransprüche.

Erfindungsgemäß erstrecken sich die Stege jeweils entlang eines vorgegebenen Kurvenabschnittes einer eine vorgegebene Kurvenkrümmung aufweisenden Stegkurve, wobei die einzelnen, voneinander in Umfangsrichtung beabstandeten und sich insbesondere zwischen einem Außenumfangsrand und einem Innenumfangsrand der Bremsscheibe bzw. der Reibscheiben erstreckenden Stegkurven jeweils eine im Wesentlichen identische Formgebung bzw. Kurvengeometrie aufweisen, insbesondere die Stegkurven eine S-förmige Krümmungsgeometrie und/oder einen gleichen Abstand voneinander in Bremsscheiben-Umfangsrichtung gesehen aufweisen. Dadurch kann bei einfachem fertigungstechnischen Aufwand eine Bremsscheibe, insbesondere eine innenbelüftete Bremsscheibe für Scheibenbremsen ausgebildet werden, die eine hervorragende Kühlleistung der Bremsscheibe ermöglicht. Durch die identische Stegkurvengeometrie kann dabei der konstruktive Aufwand sowie der Herstellaufwand für die Stege entlang der jeweiligen Stegkurvenabschnitte vorteilhaft reduziert werden. Erfindungsgemäß ist vorgesehen, dass sich wenigstens ein Teil der einzelnen Stege entlang unterschiedlicher Kurvenabschnitte erstreckt, insbesondere die Stege in hinsichtlich ihrer Erstreckungslänge und/oder ihres Kurvenabschnittes unterschiedliche Stege eingeteilt werden können, um eine hervorragende und individuell an die jeweiligen Gegebenheiten anpassbare Kühlleistung einer innenbelüfteten Bremsscheibe auszubilden, wobei drei unterschiedliche Gruppen von Stegen vorgesehen sind, die Primärstege, Sekundärstege und Tertiärstege ausbilden, die jeweils eine unterschiedliche Länge aufweisen.

Gemäß der Erfindung, wird vorgeschlagen, längere Primärstege auszubilden, die bis zum Innenumfangsrand der Reibscheiben geführt sind, jedoch vor deren Außenumfangsrand enden, wobei die demgegenüber weniger langen Sekundärstege in Radialrichtung gesehen etwa mittig bezüglich der Reibscheiben angeordnet sind und vor dem Innenurpfegsrand und dem Außenumfangsrand der Bremsscheibe enden. Weiter sind noch gegenüber den Sekundärstegen kürzere Tertiärstege vorgesehen, die am Außenumfangsrand der Reibscheiben und in Radialrichtung gesehen etwa mittig bezüglich der Reibscheiben enden. Wie die empirischen Versuche weiter gezeigt haben, gelingt es mit diesen Maßnahmen, den spezifischen Durchsatz an Kühlluft bzw. die Kühlleistung der Bremsscheibe in nicht unbeträchtlichem Umfang weiter zu verbessern, wobei die Anzahl der Stege bzw. der fertigungstechnische Aufwand an der Bremsscheibe praktisch gleich bleibt.

In vorteilhafter Weise können zwischen jeweils zwei Primärstegen alternierend fünf Stege aus Sekundärstegen und Tertiärstegen angeordnet sein, insbesondere können dabei jeweils zwei Sekundärstege zwischen drei Tertiärstegen angeordnet sein. Dies ergibt eine besonders steife und robuste Ausgestaltung der Bremsscheibe auch bei hohen Bremskräften und -temperaturen einerseits, sowie andererseits eine strömungsgünstige Vergleichmäßigung der Einströmquerschnitte am Innenumfang und der Ausströmquerschnitte am Außenumfang der Bremsscheibe.

Eine weitergehende Optimierung der Kühlungseigenschaften und der Festigkeitskriterien der Bremsscheibe ist erzielbar, wenn die Erstreckungslänge der Primärstege einen negativen (in Drehrichtung der Bremsscheibe) und einen positiven (entgegen der Drehrichtung der Bremsscheibe) Krümmungsabschnitt aufweist, während die Sekundärstege und die Tertiärstege nur positiv gekrümmt ausgeführt sind. Dabei können ferner der Wendepunkt der Krümmungsabschnitte der Primärstege und die radialen Enden der Sekundärstege im Wesentlichen auf einer gemeinsamen Kreislinie liegen.

Des weiteren können die radial innenliegenden Enden der Tertiärstege über den etwa mittig der Reibscheiben liegenden Kraftangriffsradius hinausgeführt sein und die radial äußeren Enden der Sekundärstege im Wesentlichen auf einer Kreisbahn liegen, die auch die radial äußeren Enden der Primärstege einschließt und die um zumindest eine Stegbreite vom Außenumfang der Bremsscheibe entfernt liegt.

Zur weiteren Optimierung der Kühlleistung der Bremsscheibe kann der Winkel der Primärstege am Innenumfangsrand der Bremsscheibe gegenüber einem durch diesen Bereich vom Bremsscheibenmittelpunkt ausgehen gelegten Tangentialstrahl zwischen 0 Grad und 20 Grad, insbesondere zwischen 12 Grad bis 17 Grad betragen. Ferner kann der Winkel der bis zum Außenumfangsrand der Bremsscheibe geführten Tertiärstege gegenüber einem durch diesen Bereich vom Bremsscheibenmittelpunkt ausgehend gelegten Tangentialstrahl zwischen 0 Grad und 30 Grad, insbesondere zwischen 10 Grad und 22 Grad betragen. Schließlich können der Krümmungsradius der radial äußeren, positiven, entgegen der Drehrichtung der Bremsscheibe bei z. B. Vorwärtsfahrt geneigten Krümmungsabschnitte der Primärstege und der Krümmungsradius der Sekundärstege und der Tertiärstege gleich ausgeführt sein.

Ein Ausführungsbeispiel der Erfindung ist im Folgenden mit weiteren Einzelheiten näher erläutert. Die schematische Zeichnung zeigt einen teilweisen Querschnitt durch die Stege einer innenbelüfteten Bremsscheibe für Kraftfahrzeuge.

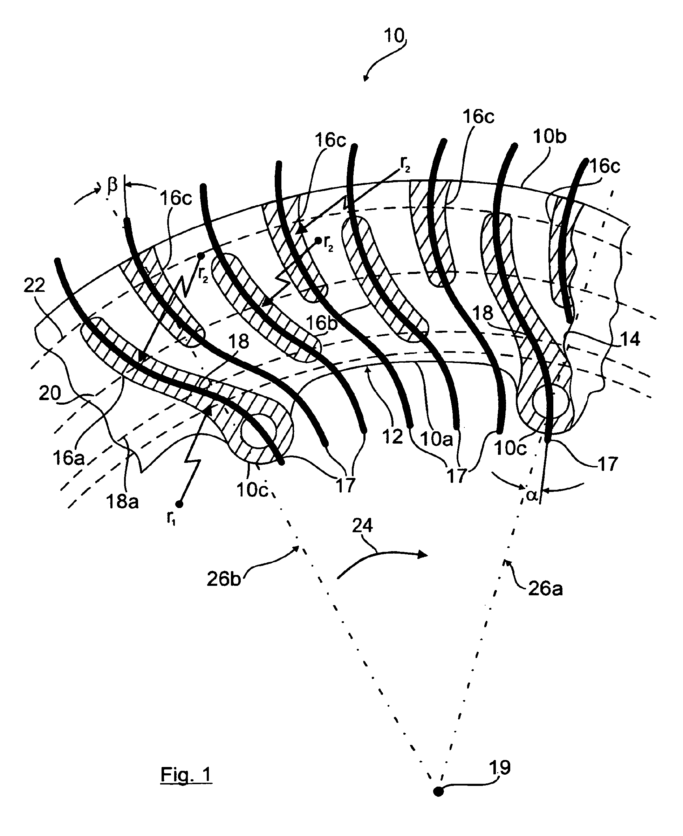

In der Zeichnung ist ein Segment einer innenbelüfteten Bremsscheibe 10 für Kraftfahrzeuge dargestellt, von der jedoch im Wesentlichen nur eine ringförmige Reibscheibe 12 ersichtlich ist. Die zweite, axial benachbarte Reibscheibe 14 ist lediglich am rechten Zeichnungsrand schematisch angedeutet.

Die beiden Reibscheiben 12, 14 der Bremsscheibe 10 sind mittels Stegen 16 miteinander verbunden, wobei die Stege 16 zwischen sich im Wesentlichen radial verlaufende Kühlkanäle (ohne Bezugszeichen) begrenzen. Die Kühlkanäle erstrecken sich jeweils vom Innenumfangsrand 10a zum Außenumfangsrand 10b der Bremsscheibe 10.

Ferner sind am Innenumfangsrand 10a der Bremsscheibe 10 Befestigungsaugen 10c angeformt, in denen Bohrungen eingearbeitet sind, über die die Bremsscheibe 10 an einem nicht dargestellten Radflansch einer Radaufhängung von Kraftfahrzeugen festlegbar ist.

Die Stege 16 der Bremsscheibe 10 sind in einer symmetrischen Anordnung über deren gesamten Umfang verteilt. Dabei erstrecken sich unterschiedlich ausgebildete Primärstege 16a, Sekundärstege 16b und Tertiärstege 16c entlang eines vorgegebenen Kurvenabschnittes einer Stegkurve 17 (fett eingezeichnet), die hier eine in etwa S-förmige Kurvengeometrie aufweist. Die Stegkurven 17 weisen jeweils eine identische Kurvenform sowie hier zudem auch bevorzugt in Umfangsrichtung gesehen einen gleichen Abstand voneinander auf.

Die längeren Primärstege 16a erstrecken sich, wie aus der Zeichnung ersichtlich ist, entlang eines vorgegebenen Kurvenabschnitts der jeweils zugeordneten Stegkurve 17 bis zum Innenumfangsrand 10a der Bremsscheibe 10, enden jedoch hier in einem Abstand von ca. der Primärstegbreite vor dem Außenumfangsrand 10b der Bremsscheibe 10.

Ferner weisen die Primärstege 16a, die am Innenumfangsrand 10a jeweils in die Befestigungsaugen 10c übergehen, einen Krümmungsabschnitt mit einem negativen Krümmungsradius r₁ (in Drehrichtung 24 gekrümmt) und einen radial äußeren Krümmungsabschnitt mit einem positiven Krümmungsradius r₂ (entgegen die Drehrichtung 24 gekrümmt) auf, die an einem Wendepunkt 18 ineinander übergehen. Die Wendepunkte 18 der Primärstege 16a liegen dabei auf einer gemeinsamen Kreisbahn 18a der Bremsscheibe 10 um deren Scheibenmittelpunkt 19.

Zwischen jeweils zwei Primärstegen 16a sind drei Tertiärstege 16c und zwei Sekundärstege 16b in gleichen Umfangsabständen angeordnet, wobei zwei Tertiärstege 16c wie ersichtlich jeweils den Primärstegen 16a unmittelbar benachbart sind.

Die Tertiärstege 16c erstrecken sich vom Außenumfangsrand 10b der Bremsscheibe 10 radial nach innen und enden etwa mittig der Reibscheiben 12, 14, wobei sie sich aber über den dynamischen Kraftwirkungsradius (strichliert eingezeichnete Kreislinie 20) hinauserstrecken.

Die jeweils zwischen den Tertiärstegen 16c angeordneten, weniger langen Sekundärstege 16b sind etwa mittig der Reibscheiben 12, 14 und symmetrisch zu der Kreislinie 20 angeordnet und enden, wie aus der Zeichnung ersichtlich ist, vor dem Innenumfangsrand 10a und dem Außenumfangsrand 10b der Bremsscheibe 10 in einem Abstand, der ungefähr deren Stegbreite entspricht. Ferner enden die Sekundärstege 16b radial innen etwa im Bereich der Kreislinie 18a der Wendepunkte 18 der Primärstege 16b und radial außen auf einer auch die Enden der Primärstege 16a einschließenden Kreisbahn 22.

Die Stege 16 weisen bevorzugt im Wesentlichen eine einheitliche Stegbreite auf. Ferner sind die Sekundärstege 16b und die Tertiärstege 16c mit dem gleichen, positiven Krümmungsradius r₂ ausgeführt, wie dies bei dem radial äußeren Krümmungsabschnitt r₂ der Primärstege 16a der Fall ist.

Dabei sind die Primärstege 16a am Innenumfangsrand 10a der Bremsscheibe 10 und damit die radial inneren Stegkurvenabschnitte so gegenüber einer durch den Kreismittelpunkt 19 und den radial inneren Stegkurvenabschnitt gelegten Gerade als Tangentialstrahl 26a geneigt, dass diese einen Winkel zwischen 0 Grad und 20 Grad, insbesondere von ca. 15 Grad zwischen sich einschließen.

Ferner beträgt der Winkel β der radial äußeren Tertiärstegendabschnitte der bis zum Außenumfangsrand 10b der Bremsscheibe 10 geführten Tertiärstege 16c gegenüber einer durch den Kreismittelpunkt 19 und den radial äußeren Tertiärstegendabschnitt gelegten Gerade als Tangentialstrahl 26b bevorzugt zwischen 0 Grad und 30 Grad, insbesondere ca. 20 Grad.

## Patentansprüche

1. Innenbelüftete Bremsscheibe für Scheibenbremsen, insbesondere für Kraftfahrzeuge, mit zwei benachbart zueinander angeordneten Reibscheiben (12, 14), die durch im Wesentlichen radial verlaufende, eine vorgegebene Krümmung aufweisende Stege (16) miteinander verbunden sind, die zwischen sich Kühlkanäle für Kühlluft ausbilden und die in Umfangsrichtung voneinander beabstandet sind, wobei sich die Stege (16) jeweils entlang eines vorgegebenen Kurvenabschnittes einer eine vorgegebene Kurvenkrümmung aufweisenden Stegkurve (17) erstrecken, wobei die einzelnen, voneinander in Umfangsrichtung beabstandeten und sich zwischen einem Außenumfangsrand (10b) und einem Innenumfangsrand (10a) erstreckenden Stegkurven (17) eine im Wesentlichen identische Formgebung aufweisen, wobei sich wenigstens ein Teil der einzelnen Stege (16) bezogen auf die anderen Stege (16) entlang unterschiedlicher Kurvenabschnitte der jeweils zugeordneten Stegkurve (17) erstreckt und die Stege (16) in hinsichtlich ihrer Erstreckungslänge und/oder ihres Kurvenabschnittes unterschiedliche Stege (16a, 16b, 16c) eingeteilt sind, und wobei die Stege als eine größte Erstreckungslänge aufweisende Primärstege (16a), gegenüber den Primärstegen(16a) kürzere Sekundärstege (16b) und gegenüber den
Sekundärstegen (16b) kürzere Tertiärstege (16c) ausgeführt sind,
**dadurch gekennzeichnet,**
**dass** sich die Primärstege (16a) entlang ihres Kurvenabschnitts vom Innenumfangsrand (10a) der Bremsscheibe (10) ausgehend bis zu einem vorgegebenen Restabstand vom Außenumfangsrand (10b) erstrecken und damit vor diesem enden,
**dass** die Sekundärstege (16b) entlang ihres Kurvenabschnittes etwa mittig zwischen dem Innen- und Außenumfangsrand (10a, b) angeordnet sind und in einem vorgegebenen Restabstand vor dem Innenumfangsrand (10a) und dem Außenumfangsrand (10b) enden, und
**dass** sich die Tertiärstege (16c) vom Außenumfangsrand (10a) der Bremsscheibe (10) ausgehend entlang ihres Kurvenabschnittes in etwa bis zur zwischen dem Innen- und Außenumfangsrand (10a, b) liegenden Mitte erstrecken.

2. Bremsscheibe nach Anspruch 1, **dadurch gekennzeichnet, dass** die Stegkurven (17) eine S-förmige Krümmungsgeometrie und/oder einen gleichen Abstand voneinander in Bremsscheiben-Umfangsrichtung aufweisen.

3. Bremsscheibe nach Anspruch 1 oder 2, **dadurch gekennzeichnet, dass** zwischen jeweils zwei Primärstegen (16a) alternierend fünf Stege aus Sekundärstegen (16b) und Tertiärstegen (16c) angeordnet sind.

4. Bremsscheibe nach Anspruch 3, **dadurch gekennzeichnet, dass** jeweils zwei Sekundärstege (16b) zwischen drei Tertiärstegen (16c) angeordnet sind.

5. Bremsscheibe nach einem der Ansprüche 1 bis 4, **dadurch gekennzeichnet, dass** sich die Primärstege (16a) über eine solche Kurvenabschnittslänge erstrecken, dass Primärstege (16a) einen bezogen auf die Drehrichtung (24) der Bremsscheibe (10) negativen und einen positiven Krümmungsabschnitt (r₁, r₂) aufweisen.

6. Bremsscheibe nach einem der Ansprüche 1 bis 5, **dadurch gekennzeichnet, dass** sich die Sekundärstege (16b) und die Tertiärstege (16c) über eine solche Kurvenabschnittslänge erstrecken, dass diese lediglich in eine Richtung gekrümmt sind.

7. Bremsscheibe nach Anspruch 5 und 6, **dadurch gekennzeichnet, dass** die Sekundär- und Tertiärstege (16b, c) lediglich positiv gekrümmt sind und die positive Krümmung einer Krümmung entgegen die Drehrichtung (24) der Bremsscheibe (10) entspricht.

8. Bremsscheibe nach einem der Ansprüche 5 bis 7, **dadurch gekennzeichnet, dass** der Wendepunkt (18) der Krümmungsabschnitte (r₁, r₂) der Primärstege (16a) und die radial inneren Enden der Sekundärstege (16b) im Wesentlichen auf einer gemeinsamen Kreislinie (18a) um den Bremsscheibenmittelpunkt liegen.

9. Bremsscheibe nach einem der Ansprüche 1 bis 8, **dadurch gekennzeichnet, dass** die radial innenliegenden Enden der Tertiärstege (16c) über den etwa mittig der Reibscheiben (12, 14) liegenden Kraftangriffsradius (Kreislinie 20) hinausgeführt sind.

10. Bremsscheibe nach einem der Ansprüche 1 bis 9, **dadurch gekennzeichnet, dass** die radial äußeren Enden der Sekundärstege (16b) im Wesentlichen auf einer Kreisbahn (22) um den Bremsscheibenmittelpunkt liegen, an die auch die radial äußeren Enden der Primärstege (16a) angrenzen und die um einen vorgegebenen Restabstand vom Außenumfangsrand (10b) der Bremsscheibe (10) entfernt liegt.

11. Bremsscheibe nach einem der Ansprüche 1 bis 10, **dadurch gekennzeichnet, dass** die Primärstege (16a) am Innenumfangsrand (10a) der Bremsscheibe (10) und damit die entsprechenden radial inneren Stegkurvenabschnitte mit einem radial inneren Primärstegende so in Drehrichtung der Bremsscheibe (10) gekrümmt sind, dass dieser Primärstegendabschnitt mit einer vom Bremsscheibenmittelpunkt ausgehenden und durch das radial innere Primärstegende gelegten Geraden (26a) als Tangentialstrahl einen Winkel zwischen 0 Grad und 20 Grad, bevorzugt zwischen 12 Grad und 17 Grad, einschließt.

12. Bremsscheibe nach einem der Ansprüche 1 bis 11, **dadurch gekennzeichnet, dass** die bis zum Außenumfangsrand (10b) der Bremsscheibe (10) geführten Tertiärstege (16c) und damit die entsprechenden radial äußeren Stegkurvenabschnitte mit einem radial äußeren Tertiärstegende so in Drehrichtung (24) der Bremsscheibe (10) gekrümmt sind, dass dieser Tertiärstegendabschnitt mit einer vom Bremsscheibenmittelpunkt ausgehenden und durch das radial äußere Tertiärstegende gelegten Geraden (26b) als Tangentialstrahl einen Winkel zwischen 0 bis 30 Grad, insbesondere zwischen 10 Grad und 22 Grad einschließt.

## Claims

1. Internally ventilated brake disc for disc brakes, in particular for motor vehicles, having two friction discs (12, 14) which are arranged adjacent to one another and which are connected to one another by substantially radially running webs (16), which webs (16) have a predefined curvature and between them form cooling ducts for cooling air and are spaced apart from one another in the circumferential direction, the webs (16) in each case extending along a predefined curve section of a web curve (17) which has a predefined curvature, the individual web curves (17) which are spaced apart from one another in the circumferential direction and which extend between an outer circumferential edge (10b) and an inner circumferential edge (10a) having a substantially identical shape, at least some of the individual webs (16) extending along different curve sections of the respectively associated web curve (17) than the other webs (16), and the webs (16) being classed as different webs (16a, 16b, 16c) with regard to their length extent and/or their curve section, and the webs being designed as primary webs (16a) which have a greatest length extent, secondary webs (16b) which are shorter than the primary webs (16a), and tertiary webs (16c) which are shorter than the secondary webs (16b), **characterized**
**in that** the primary webs (16a) extend along their curve section proceeding from the inner circumferential edge (10a) of the brake disc (10) up to a predefined residual distance from the outer circumferential edge (10b) and therefore end before the latter,
**in that** the secondary webs (16b) are arranged along their curve section approximately centrally between the inner and outer circumferential edge (10a, b) and end at a predefined residual distance before the inner circumferential edge (10a) and before the outer circumferential edge (10b), and
**in that** the tertiary webs (16c) extend proceeding from the outer circumferential edge (10a) of the brake disc (10) along their curve section approximately up to the middle between the inner and outer circumferential edges (10a, b).

2. Brake disc according to Claim 1, **characterized in that** the web curves (17) have an S-shaped curvature geometry and/or are at equal distances from one another in the brake disc circumferential direction.

3. Brake disc according to Claim 1 or 2, **characterized in that** five webs, comprising secondary webs (16b) and tertiary webs (16c) in alternation, are arranged between in each case two primary webs (16a).

4. Brake disc according to Claim 3, **characterized in that** in each case two secondary webs (16b) are arranged between three tertiary webs (16c).

5. Brake disc according to one of Claims 1 to 4, **characterized in that** the primary webs (16a) extend over such a length of curve section that primary webs (16a) have a negative and a positive curvature section (r₁, r₂) in relation to the direction of rotation (24) of the brake disc (10).

6. Brake disc according to one of Claims 1 to 5, **characterized in that** the secondary webs (16b) and the tertiary webs (16c) extend over such a length of curve section that they are curved only in one direction.

7. Brake disc according to Claim 5 and 6, **characterized in that** the secondary and tertiary webs (16b, c) are only positively curved and the positive curvature corresponds to a curvature counter to the direction of rotation (24) of the brake disc (10).

8. Brake disc according to one of Claims 5 to 7, **characterized in that** the point of inflection (18) of the curvature sections (r₁, r₂) of the primary webs (16a) and the radially inner ends of the secondary webs (16b) lie substantially on a common circular line (18a) about the brake disc central point.

9. Brake disc according to one of Claims 1 to 8, **characterized in that** the radially inner ends of the tertiary webs (16c) extend beyond the radius of force action (circular line 20) which is situated approximately centrally between the friction discs (12, 14).

10. Brake disc according to one of Claims 1 to 9, **characterized in that** the radially outer ends of the secondary webs (16b) lie substantially on a circular path (22) about the brake disc central point, which circular path (22) is also adjoined by the radially outer ends of the primary webs (16a) and is situated at a predefined residual distance from the outer circumferential edge (10b) of the brake disc (10).

11. Brake disc according to one of Claims 1 to 10, **characterized in that** the primary webs (16a), at the inner circumferential edge (10a) of the brake disc (10), and therefore the corresponding radially inner web curve sections with a radially inner primary web end, are curved in the direction of rotation of the brake disc (10) in such a way that said primary web end section encloses an angle of between 0 degrees and 20 degrees, preferably of between 12 degrees and 17 degrees, with a straight line (26a), as a tangential ray, which proceeds from the brake disc central point and runs through the radially inner primary web end.

12. Brake disc according to one of Claims 1 to 11, **characterized in that** the tertiary webs (16c) which extend up to the outer circumferential edge (10b) of the brake disc (10), and therefore the corresponding radially outer web curve sections with a radially outer tertiary web end, are curved in the direction of rotation (24) of the brake disc (10) in such a way that said tertiary web end section encloses an angle of between 0 and 30 degrees, in particular of between 10 degrees and 22 degrees, with a straight line (26b), as a tangential ray, which proceeds from the brake disc central point and runs through the radially outer tertiary web end.

## Revendications

1. Disque de frein à ventilation intérieure pour freins à disques, en particulier pour véhicules automobiles, comprenant deux disques de friction (12, 14) disposés l'un à côté de l'autre, qui sont connectés l'un à l'autre par des nervures (16) s'étendant essentiellement radialement, présentant une courbure prédéfinie, qui constituent entre elles des canaux de refroidissement pour de l'air de refroidissement et qui sont espacées les unes des autres dans la direction périphérique, les nervures (16) s'étendant à chaque fois le long d'une portion de courbe prédéfinie d'une courbe de nervure (17) présentant une courbure prédéfinie, les courbes de nervure (17) individuelles, espacées les unes des autres dans la direction périphérique et s'étendant entre un bord périphérique extérieur (10b) et un bord périphérique intérieur (10a) présentant une forme essentiellement identique, au moins une partie des nervures individuelles (16) s'étendant par rapport aux autres nervures (16) le long de différentes portions de courbe de la courbe de nervure (17) associée respective, et les nervures (16) étant divisées en nervures différentes (16a, 16b, 16c) en termes de leur longueur d'étendue et/ou de leur portion de courbe, et les nervures étant réalisées sous forme de nervures primaires (16a) présentant une plus grande longueur d'étendue, de nervures secondaires (16b) plus courtes par rapport aux nervures primaires (16a), et de nervures tertiaires (16c) plus courtes par rapport aux nervures secondaires (16b),
**caractérisé en ce que**
les nervures primaires (16a) s'étendent le long de leur portion de courbe depuis le bord périphérique intérieur (10a) du disque de frein (10) jusqu'à une distance restante prédéfinie du bord périphérique extérieur (10b), et se terminent donc avant celui-ci,
**en ce que** les nervures secondaires (16b) sont disposées le long de leur portion de courbe approximativement au centre entre le bord périphérique intérieur et le bord périphérique extérieur (10a, b) et se terminent à une distance restante prédéfinie avant le bord périphérique intérieur (10a) et le bord périphérique extérieur (10b), et
**en ce que** les nervures tertiaires (16c) s'étendent depuis le bord périphérique extérieur (10a) du disque de frein (10) le long de leur portion de courbe approximativement jusqu'au milieu situé entre le bord périphérique intérieur et le bord périphérique extérieur (10a, b).

2. Disque de frein selon la revendication 1, **caractérisé en ce que** les courbes de nervure (17) présentent une géométrie de courbure en forme de S et/ou présentent une distance égale les unes aux autres dans la direction périphérique du disque de frein.

3. Disque de frein selon la revendication 1 ou 2, **caractérisé en ce que** cinq nervures constituées de nervures secondaires (16b) et de nervures tertiaires (16c) sont disposées en alternance entre deux nervures primaires respectives (16a).

4. Disque de frein selon la revendication 3, **caractérisé en ce que** deux nervures secondaires (16b) sont à chaque fois disposées entre trois nervures tertiaires (16c).

5. Disque de frein selon l'une quelconque des revendications 1 à 4, **caractérisé en ce que** les nervures primaires (16a) s'étendent sur une longueur de portion de courbe telle que les nervures primaires (16a) présentent une portion de courbure négative et positive (r₁, r₂) par rapport au sens de rotation (24) du disque de frein (10).

6. Disque de frein selon l'une quelconque des revendications 1 à 5, **caractérisé en ce que** les nervures secondaires (16b) et les nervures tertiaires (16c) s'étendent sur une longueur de portion de courbe telle que celles-ci soient seulement courbées dans une direction.

7. Disque de frein selon les revendications 5 et 6, **caractérisé en ce que** les nervures secondaires et tertiaires (16b, c) ont uniquement une courbure positive et la courbure positive correspond à une courbure à l'encontre du sens de rotation (24) du disque de frein (10).

8. Disque de frein selon l'une quelconque des revendications 5 à 7, **caractérisé en ce que** le point d'inflexion (18) des portions de courbure (r₁, r₂) des nervures primaires (16a) et les extrémités radialement internes des nervures secondaires (16b) se situent essentiellement sur une ligne circulaire commune (18a) autour du centre du disque de frein.

9. Disque de frein selon l'une quelconque des revendications 1 à 8, **caractérisé en ce que** les extrémités situées radialement à l'intérieur des nervures tertiaires (16c) sont guidées au-delà du rayon d'application de force (cercle 20) situé approximativement au centre des disques de friction (12, 14).

10. Disque de frein selon l'une quelconque des revendications 1 à 9, **caractérisé en ce que** les extrémités radialement externes des nervures secondaires (16b) se situent essentiellement sur une trajectoire circulaire (22) autour du centre du disque de frein, à laquelle sont adjacentes également les extrémités radialement externes des nervures primaires (16a), et qui est éloignée d'une distance restante prédéfinie du bord périphérique extérieur (10b) du disque de frein (10).

11. Disque de frein selon l'une quelconque des revendications 1 à 10, **caractérisé en ce que** les nervures primaires (16a) sur le bord périphérique intérieur (10a) du disque de frein (10) et donc les portions de courbe de nervure radialement internes correspondantes avec une extrémité de nervure primaire radialement interne sont courbées dans le sens de rotation du disque de frein (10) de telle sorte que cette portion d'extrémité de nervure primaire forme avec une droite (26a) partant du centre du disque de frein et traversant l'extrémité de nervure primaire radialement interne, en tant que faisceau tangentiel, un angle compris entre 0 degré et 20 degrés, de préférence entre 12 degrés et 17 degrés.

12. Disque de frein selon l'une quelconque des revendications 1 à 11, **caractérisé en ce que** les nervures tertiaires (16c) guidées jusqu'au bord périphérique extérieur (10b) du disque de frein (10) et donc les portions de courbe de nervure radialement externes correspondantes avec une extrémité de nervure tertiaire radialement externe sont courbées dans le sens de rotation (24) du disque de frein (10) de telle sorte que cette portion d'extrémité de nervure tertiaire forme avec une droite (26b) partant du centre du disque de frein et traversant l'extrémité de la nervure tertiaire radialement externe, en tant que faisceau tangentiel, un angle compris entre 0 degré et 30 degrés, de préférence entre 10 degrés et 22 degrés.
